# EUROPÄISCHE PATENTSCHRIFT

(11) **EP 0 498 246 B1**
(45) Veröffentlichungstag und Bekanntmachung des Hinweises auf die Patenterteilung: **02.01.1997**
(21) Anmeldenummer: 92101241.5
(22) Anmeldetag: 27.01.1992
(51) Int. Cl.: G11B 7/095

(54) **Verfahren zur Korrektur eines Fehlwinkels**
Method for the correction of an error-angle
Méthode pour la correction d'une erreur d'angle

(30) Priorität: 06.02.1991 DE 4103506; 09.02.1991 DE 4103949
(43) Veröffentlichungstag der Anmeldung: 12.08.1992
(73) Patentinhaber: Blaupunkt-Werke GmbH, D-31132 Hildesheim (DE)
(72) Erfinder: Baas, Dieter, W-7640 Auenheim (DE)

(56) Entgegenhaltungen:
- EP-A- 0 148 028
- EP-A- 0 313 818
- EP-A- 0 397 354
- FR-A- 2 530 060
- PATENT ABSTRACTS OF JAPAN vol. 11, no. 308 (P-624)8. Oktober 1987
- WO 92/04712

## Beschreibung

Gegenstand des Schutzrechts ist ein Verfahren zur Korrektur eines Fehlwinkels zwischen der optischen Achse des Abtastkopfes in einem Abspielgerät für optische Speicherplatten und der Normalen zur Oberfläche der Speicherplatte im Abtastpunkt.

Aus der WO 92/04712, welche Stand der Technik gemäß Art. 54(3) EPÜ darstellt, ist ein Verfahren zum Messen oder Regeln des Radial-und Tangentialwinkels eines Lichtstrahls bekannt, bei dem der Tangentialwinkel und der Radialwinkel eines zum Lesen der Daten auf einen rotierenden Aufzeichnungsträger gerichteten Lichtstrahls gemessen oder auf einen Sollwert geregelt werden kann, wobei der Lichtstrahl vom Aufzeichnungsträger auf einen Fotodetektor reflektiert wird, dessen Ausgangssignal das Datensignal darstellt. Dieses Datensignal wird in einem Amplitudendemodulator demoduliert. Aus der Amplitude C und der Phasenlage ϕ des demodulierten Datensignals werden das Regelsignal UR = C·sinϕ·cosα für den Radialwinkel und das Regelsignal UT = -C cosϕ sinα für den Tangentialwinkel erzeugt. Die Werte von C und ϕ werden durch Messungen ermittelt. In einem Mikroprozessor werden aus dem demodulierten Datensignal die Regelsignale UR und UT berechnet. Die Regelsignale werden auf Regler gegeben, die zum Regeln des Tangentialwinkels und des Radialwinkels auf einen Sollwert dienen.

Aus der EP-0 313 818 A2 ist ein Gerät zum Lesen optischer Informationen bekannt, bei dem ein Abtaststrahl, der zum Bestrahlen einer Plattenoberfläche Verwendung findet, gewobbelt wird und bei dem eine Frequenz- und eine Amplitudenkomponente, die sich aus dieser Wobbelung ergeben, aus dem Ausgangssignal eines Lichtdetektors ermittelt werden. Die durch die Frequenz- und die Amplitudenkomponente zur Verfügung gestellte Information kann dazu benutzt werden, die Einflüsse von Plattenkrümmung und Plattenschlag zu kompensieren. Zum Wobbeln ist ein eigener Oszillator notwendig.

Eine Korrektur des Fehlwinkels setzt die Lösung der Aufgabe voraus, ein Steuersignal verfügbar zu haben, dessen Größe eindeutig vom Fehlwinkel abhängt.

Die Erfindung, die auch diese Aufgabe löst, ist durch die Merkmale des Anspruchs 1 beziehungsweise des Anspruchs 5 gekennzeichnet.

Die Erfindung läßt sich mit Hilfe eines Abspielgerätes verwirklichen, daß durch die Merkmale des Anspruchs 2 beziehungsweise des Anspruchs 6 gekennzeichnet ist.

Die erfindungsgemäßen Verfahren mit den Merkmalen der unabhängigen Ansprüche 1 und 5 haben den Vorteil, daß durch Verschwenken des Abtastkopfes beziehungsweise des Antriebsmotors gezielt das Minimum der niederfrequenten Modulation und damit eine optimale Fehlwinkelkorrektur eingestellt wird, ohne daß der Abtaststrahl gewobbelt werden müßte oder die Fehlwinkel explizit zu berechnen wären. Die Korrektur eines Fehlwinkels ist daher auf einfache und wenig aufwendige Weise möglich.

Durch die in den unabhängigen Ansprüchen 2 und 6 angegebenen erfindungsgemäßen Abspielgeräte für optische Speicherplatten sind vorteilhafte Realisierungen der in den Ansprüchen 1 beziehungsweise 5 angegebenen Verfahren möglich. Besonders vorteilhaft ist die Verwendung von Synchron-Demodulatoren, mit denen die Amplitude der Hüllkurve definiert zu vorgegebenen, für das Ausmaß der Modulation charakteristischen Zeiten erfaßt werden kann.

Durch die in den Unteransprüchen aufgeführten Maßnahmen sind vorteilhafte Weiterbildungen und Verbesserungen der in den unabhängigen Ansprüchen 2 und 6 angegebenen Abspielgeräten möglich. Besonders vorteilhaft ist die Verwendung zweier Synchron-Demodulatoren gemäß den Ansprüchen 3 und 7, deren Steuereingänge über einen 90°-Phasenschieber miteinander verbunden sind, wodurch beide Fehlwinkelkomponenten zur Fehlwinkelkorrektur berücksichtigt werden.

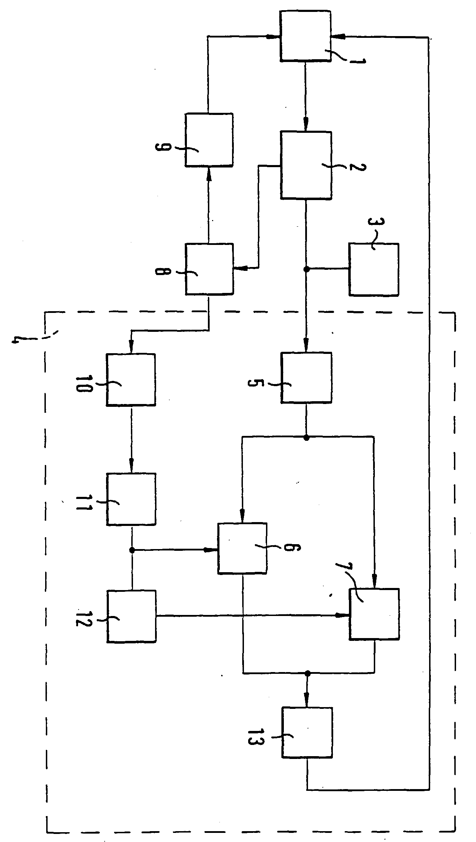

Figur 1 zeigt die hier wesentlichen Teile des Abspielgerätes in Form eines Blockschaltbildes.

Vor dessen Erläuterung wird zum besseren Verständnis vorausgeschickt, daß die Bits der zu speichernden Informationen in den optischen Speicherplatten durch eine Veränderung des Reflexionfaktors innerhalb der einzelnen Spuren aufgezeichnet werden. Bei Auslesen der Informationen wird die jeweilige Spur von einer Laserdiode beleuchtet und das reflektierte Licht mit einem Fotoelement gemessen. Laserdiode und Fotoelement sind zusammen mit einem Objektiv und weiteren der Regelung dienenden Elementen in einem Abtastkopf zusammengefaßt, der eine optische Achse besitzt, die bei dem Aufbau des Abspielgerätes mit der im Abtastpunkt errichteten Normalen auf der Oberfläche der Speicherplatten zusammenfallen soll. Abweichungen zwischen der optischen Achse und der Normalen führen wegen der Beeinträchtigung der Reflektionsverhältnisse zu Fehlerraten bei der späteren Erkennung der gespeicherten Informationen.

Bei dem Auslesen der Informationen muß der Abtastkopf in einem vorgegebenen Abstand zur Plattenoberfläche gehalten werden. Er wird dabei in radialer Richtung über die Speicherplatten von innen nach außen geführt. Zur Einhaltung des richtigen Abstands ist der Abtastkopf im Abspielgerät verstellbar gelagert. Das Stellglied erhält ein Steuersignal von einer als Fokusservo bezeichneten Baugruppe. Hat die optische Speicherplatte einen vertikalen Schlag - das bedeutet, daß sich der Abstand zwischen der Plattenoberfläche und einem fest montierten Abtastkopf periodisch ändern würde - dann liefert der Fokusservo eine Wechselspannung, deren Frequenz der Drehzahl entspricht.

Der Erfinder hat nun festgestellt, daß auch die hochfrequente Ausgangsspannung des Abtastkopfes beim Lesen einer Speicherplatte mit vertikalem Schlag eine schwache Modulation aufweist, deren Frequenz der Drehzahl entspricht. Diese Modulation wird verstärkt, wenn zwischen der optischen Achse des Abtastkopfes und der Normalen der Oberfläche der Speicherplatte im Abtastpunkt ein Fehlwinkel besteht. Diese Modulation ist also abhängig von der Größe des Fehlwinkels. Dies führte den Erfinder zu der Lehre, daß man zur Korrektur des Fehlwinkels bei der Justage des Abtastkopfes ein Minimum der Modulation einzustellen hat. Zur Erleichterung der Justage arbeitet man bei der Einstellung der Abtastkopf-Stellung mit einer Speicherplatte mit einem genormten vertikalen Plattenschlag.

Das Blockschaltbild gibt nun die wesentlichen, für die Korrektur des Fehlwinkels erforderlichen Baugruppen wieder. Die Korrektur kann dabei manuell durchgeführt werden oder mittels gesteuerten Stellgliedern automatisch erfolgen. Die Korrekturwerte der Steuersignale für die Stellglieder werden dann in geeignete Speicher eingeschrieben und sind dadurch für die Betriebszeit des Abspielgerätes mit eben diesem Abtastkopf verfügbar. Nach einer Reparatur am Abtastkopf müssen die Speicherwerte neu eingestellt werden.

Der Abtastkopf 1 liefert ein mit den ausgelesenen Informationen hochfrequent moduliertes Ausgangssignal, das von einem Vorverstärker 2 verstärkt wird und im Datendecoder 3 weiterverarbeitet wird.

Das Ausgangssignal des Vorverstärkers 2 wird ferner in einer Meßstufe 4 erneut in einem Verstärker 5, der ein Tiefpaßverhalten zeigen kann, verstärkt und dann als Eingangssignal zwei parallelgeschalteten Synchron-Demodulatoren 6, 7 zugeführt.

Der Vorverstärker 2 besitzt einen zweiten Signalausgang, an den der Fokusservo 8 angeschlossen ist. Dieser Fokusservo 8 liefert ein Signal, mit dem der Abtastkopf mittels des Fokusaktuators 9 auf gleichbleibenden Abstand zur Plattenoberfläche gehalten wird. Bei einer Speicherplatte mit einem vertikalen Plattenschlag ist dem Signal die bereits erwähnte Wechselspannung überlagert.

Diese Wechselspannung wird über einen Tiefpaß 10 und einem Begrenzerverstärker 11 dem Steuereingang des ersten Synchron-Demodulators 6 direkt und dem Steuereingang des zweiten Synchron-Demodulators 7 über einen 90°-Phasenschieber 12 zugeführt.

Die Ausgangsspannungen der beiden Synchron-Demodulatoren entsprechen nun zwei um 90° gegeneinander versetzten Komponenten des Fehlwinkels. Mit beiden Ausgangsspannungen lassen sich mittels einer Auswertschaltung 13 zwei um 90° gegeneinander versetzten Schwenkbewegungen im Lager des Abtastkopfes derart steuern, daß beide Komponenten zu einem Minimum werden. Diese Schwenkbewegungen können z. B. durch um 90° gegeneinander versetzte Piezoelemente im Lager des Objektivs bewirkt werden. Sieht man eine Speicherung des Korrekturwertes, d. h. der Steuerspannungen für die Piezoelemente, vor, so kann für die Einstellung der Microelemente die Meßstufe 4 als separater Teil aufgebaut werden. Dazu ist das Abspielgerät mit einem von außen zugänglichen Abgriff für das HF-modulierte Ausgangssignal des Vorverstärkers und für das Steuersignal für den Fokusaktuator auszurüsten.

Bei einer manuellen Verschwenkung des Abtastkopfes können die beiden Ausgangsspannungen auf einem Bildschirm dargestellt werden, wo sich die Minimisierung optisch verfolgen läßt. Die Korrektur wird dabei zweckmäßiger Weise auf einem iterativen Weg erfolgen, wobei die Wirkungsrichtung einer vorgenommenen Verstellung kontrolliert wird.

Diese erwähnten Schwenkbewegungen können z. B. auch durch um 90° gegeneinander versetzte Piezoelemente im Lager des Antriebsmotors bewirkt werden. Zweckmäßigerweise wird eines der Piezoelemente in einer Ebene mit dem Abtastkopf angeordnet.

## Patentansprüche

1. Verfahren zur Korrektur eines Fehlwinkels zwischen der optischen Achse eines verstellbar gelagerten Abtastkopfes (1) in einem Abspielgerät für optische Speicherplatten und der Normalen zur Oberfläche der Speicherplatte im Abtastpunkt, dadurch gekennzeichnet, daß durch Verschwenken des Abtastkopfes (1) das Minimum der durch einen vertikalen Schlag der optischen Speicherplatte entsprechend der Drehzahl der optischen Speicherplatte bewirkten niederfrequenten Modulation der Ausgangsspannung des Abtastkopfes (1) eingestellt wird.

2. Abspielgerät für optische Speicherplatten mit einem verstellbar gelagerten Abtastkopf (1), der ein Objektiv, eine Laserdiode und ein Fotoelement umfaßt, das ein hochfrequentes Ausgangssignal liefert, welches im Datendecoder (3) entschlüsselt wird, sowie mit einem vom Fokusservo (8) gesteuerten Fokusaktuator (9), mit dem der Abtastkopf (1) in einem vorgegebenen Abstand zur Plattenoberfläche geführt wird, dadurch gekennzeichnet, daß dem Abtastkopf (1) mindestens ein Synchron-Demodulator (6) nachgeschaltet ist und daß das Ausgangssignal des Fokusservo (8) über einen Tiefpaß (10) dem Steuereingang des Synchron-Demodulators (6) zugeführt wird und der Ausgang des Synchron-Demodulators an eine Auswerteeinheit (13) angeschlossen ist welche Schwenkbewegungen des Abtastkopfles (1) derart steuert, daß das Ausgangssignal des Synchrondemodulators (6) minimal wird.

3. Abspielgerät nach Anspruch 2, dadurch gekennzeichnet, daß dem Abtastkopf (1) zwei Synchron-Demodulatoren (6, 7) parallel nachgeschaltet sind und daß das Ausgangssignal des Fokusservo (8) über einen Tiefpaß (10) dem Steuereingang des einen Synchron-Demodulators (6) direkt und dem Steuereingang des anderen Synchron-Demodulators (7) über einen 90°-Phasenschieber (12) zugeführt wird und daß die Ausgänge beider Synchron-Demodulatoren an die Auswerteeinheit (13) angeschlossen sind.

4. Abspielgerät nach Anspruch 3, dadurch gekennzeichnet, daß das Lager des Objektivs im Abtastkopf (1) um 90° zueinander angeordnete Piezoelemente umfaßt, deren Steuereingänge an die Auswerteeinheit (13) angeschlossen sind.

5. Verfahren zur Korrektur eines Fehlwinkels zwischen der optischen Achse eines Abtastkopfes (1) in einem Abspielgerät für optische Speicherplatten und der Normalen zur Oberfläche der Speicherplatte im Abtastpunkt, dadurch gekennzeichnet, daß der Motor des Abspielgerätes verschwenkbar gelagert wird und durch Verschwenken der Motorachse das Minimum der durch einen vertikalen Schlag der Speicherplatte bewirkten niederfrequenten Modulation der Ausgangsspannung des Abstastkopfes (1) eingestellt wird.

6. Abspielgerät für optische Speicherplatten mit einem Antriebsmotor, einem Abtastkopf (1), der ein Objektiv, eine Laserdiode und ein Fotoelelement umfaßt, das ein hochfrequentes Ausgangssignal liefert, welches im Datendecoder (3) entschlüsselt wird, sowie mit einem vom Fokusservo (8) gesteuerten Fokusaktuator (9), mit dem der Abtastkopf (1) in einem vorgegebenen Abstand zur Plattenoberfläche geführt wird, dadurch gekennzeichnet, daß dem Abtastkopf (1) mindestens ein Synchron-Demodulator (6) nachgeschaltet ist und das Ausgangssignal des Fokusservo (8) über einen Tiefpaß (10) dem Steuereingang des Synchron-Demodulators (6) zugeführt ist und daß das Ausgangssignal des Synchron-Demodulators (6) Schwenkbewegungen in dem Lager des Antriebsmotors derart steuert, daß das Ausgangssignal des Synchrondemodulators (6) minimal wird.

7. Abspielgerät nach Anspruch 6, dadurch gekennzeichnet, daß dem Abtastkopf (1) zwei Synchron-Demodulatoren (6, 7) parallel nachgeschaltet sind und daß das Ausgangssignal des Fokusservo (8) über einen Tiefpaß (10) dem Steuereingang des einen Synchron-Demodulators (6) direkt, dem Steuereingang des anderen Synchron-Demodulators (7) über einen 90°-Phasenverschieber (12) zugeführt wird und daß die Ausgänge beider Synchron-Demodulatoren (6,7) über eine Auswerteeinheit (13) zwei um 90° versetzt angeordnete Stellglieder im Lager des Antriebsmotors steuern.

8. Abspielgerät nach Anspruch 7, dadurch gekennzeichnet, daß das eine Stellelement in einer Ebene mit dem Abtastkopf (1) liegt.

## Claims

1. Method for the correction of an error angle between the optical axis of an adjustably mounted scanning head (1) in a playing device for optical storage disks and the normal to the surface of the storage disk at the scanning point, characterized in that the minimum of the low-frequency modulation, caused by vertical run-out of the optical storage disk corresponding to the rotational speed of the optical storage disk, of the output voltage from the scanning head (1) is set by pivoting the scanning head (1).

2. Playing device for optical storage disks, having an adjustably mounted scanning head (1) which comprises a lens, a laser diode and a photo element which supplies a high-frequency output signal which is decoded in the data decoder (3), as well as having a focus actuator (9) which is controlled by a focus servo (8) and with which the scanning head (1) is guided at a predefined distance from the disk surface, characterized in that at least one synchronous demodulator (6) is connected downstream of the scanning head (1), and in that the output signal from the focus servo (8) is fed via a low-pass filter (10) to the control input of the synchronous demodulator (6), and the output of the synchronous demodulator is connected to an evaluation unit (13) which controls pivoting movements of the scanning head (1) in such a way that the output signal from the synchronous demodulator (6) becomes a minimum.

3. Playing device according to Claim 2, characterized in that two synchronous demodulators (6, 7) are connected in parallel downstream of the scanning head (1), and in that the output signal from the focus servo (8) is fed directly via a low-pass filter (10) to the control input of one synchronous demodulator (6) and via a 90° phase shifter (12) to the control input of the other synchronous demodulator (7), and in that the ouputs of the two synchronous demodulators are connected to the evaluation unit (13).

4. Playing device according to Claim 3, characterized in that the mounting of the lens in the scanning head (1) comprises piezoelectric elements which are arranged at 90° to each other and whose control inputs are connected to the evaluation unit (13).

5. Method for the correction of an error angle between the optical axis of a scanning head (1) in a playing device for optical storage disks and the normal to the surface of the storage disk at the scanning point, characterized in that the motor of the playing device is pivotably mounted and the minimum of the low-frequency modulation, caused by vertical run-out of the storage disk, of the output voltage from the scanning head (1) is set by pivoting the motor axis.

6. Playing device for optical storage disks, having a drive motor, a scanning head (1) which comprises a lens, a laser diode and a photo element which supplies a high-frequency output signal which is decoded in the data decoder (3), as well as having a focus actuator (9) which is controlled by a focus servo (8) and with which the scanning head (1) is guided at a predefined distance from the disk surface, characterized in that at least one synchronous demodulator (6) is connected downstream of the scanning head (1), and the output signal from the focus servo (8) is fed via a low-pass filter (10) to the control input of the synchronous demodulator (6), and in that the output signal from the synchronous demodulator (6) controls pivoting movements in the mounting of the drive motor in such a way that the output signal from the synchronous demodulator (6) becomes a minimum.

7. Playing device according to Claim 6, characterized in that two synchronous demodulators (6, 7) are connected in parallel downstream of the scanning head (1), and in that the output signal from the focus servo (8) is fed directly via a low-pass filter (10) to the control input of one synchronous demodulator (6) and via a 90° phase shifter (12) to the control input of the other synchronous demodulator (7), and in that the outputs of the two synchronous demodulators (6, 7) control, via an evaluation unit (13), two actuators arranged offset by 90° in the mounting of the drive motor.

8. Playing device according to Claim 7, characterized in that one actuating element is located in one plane with the scanning head (1).

## Revendications

1. Procédé de correction d'une erreur d'angle entre l'axe optique d'une tête de lecture (1) montée de façon réglable dans un appareil de reproduction pour des disques de mémoire optiques, et la perpendiculaire à la surface du disque de mémoire au point de lecture,
caractérisé en ce que
en faisant pivoter la tête de lecture (1) on règle le minimum de la modulation de la tension de sortie de la tête de lecture (1) à basse fréquence provoquée par un impact vertical du disque de mémoire optique correspondant à la vitesse de rotation.

2. Appareil de reproduction pour des disques de mémoire optiques, ayant une tête de lecture (1) montée de façon réglable, qui comprend un objectif, une diode laser et une cellule photoélectrique délivrant un signal de sortie à haute fréquence qui est décodé dans le décodeur de données (3), ainsi qu'un actionneur de foyer (9) commandé par l'asservissement de foyer (8), par lequel la tête de lecture (1) est mise à une distance prédéfinie de la surface du disque,
caractérisé en ce que
on monte au moins un démodulateur synchrone (6) en aval de la tête de lecture (1), et en ce que le signal de sortie de l'asservissement de foyer (8) est raccordé par l'intermédiaire d'un filtre passe-bas (10) à l'entrée de commande du démodulateur synchrone (6), la sortie du démodulateur-synchrone étant raccordée à une unité d'exploitation (13) qui commande des mouvements de pivotement de la tête de lecture (1) d'une manière telle que le signal de sortie du modulateur synchrone soit réduit au minimum.

3. Appareil de production selon la revendication 2,
caractérisé en ce que
deux démodulateurs synchrones (6, 7) sont montés en parallèle en aval de la tête de lecture (1), en ce que le signal de sortie de l'asservissement de foyer (8) est amené, par l'intermédiaire d'un filtre passe-bas (10), directement à l'entrée de commande de l'un des démodulateurs synchrones (6), et à l'entrée de commande de l'autre démodulateur synchrone (7) par l'intermédiaire d'un déphaseur à 90° (12), et en ce que les sorties des deux démodulateurs synchrones sont raccordées à l'unité d'exploitation (13).

4. Appareil de production selon la revendication 3,
caractérisé en ce que
la monture de l'objectif dans la tête de lecture (1) comprend des éléments piézo-électriques disposés à 90° l'un par rapport à l'autre, dont les entrées de commande sont raccordées à l'unité d'exploitation (13).

5. Procédé pour corriger une erreur d'angle entre l'axe optique d'une tête de lecture (1) dans un appareil de reproduction pour des disques de mémoire optiques, et la perpendiculaire à la surface de la cible au point de lecture,
caractérisé en ce que
le moteur de l'appareil de reproduction est monté de façon à pouvoir pivoter, et l'on règle, en faisant pivoter l'axe du moteur, le minimum de la modulation à basse fréquence de la tension de sortie de la tête de lecture (1), provoquée par un impact vertical sur le disque de mémoire.

6. Appareil de reproduction pour des disques de mémoire optiques, ayant un moteur d'entraînement, une tête de lecture (1) qui comprend un objectif, une diode laser et une cellule photoélectrique délivrant un signal de sortie à haute fréquence qui est décodé dans le décodeur de données (3), ainsi qu'un actionneur de foyer (9) commandé par l'asservissement de foyer (8), par lequel la tête de lecture (1) est mise à une distance prédéfinie de la surface du disque,
caractérisé en ce que
on monte en aval de la tête de lecture (1) au moins un démodulateur synchrone (6), en ce que le signal de sortie de l'asservissement de foyer (8) est raccordé par l'intermédiaire d'un filtre passe-bas (10) à l'entrée de commande du démodulateur synchrone (6), et en ce que le signal de sortie du démodulateur synchrone (6) commande des mouvements de pivotement dans la monture du moteur d'entraînement, d'une manière telle que le signal de sortie du démodulateur synchrone (6) demeure minimum.

7. Appareil de reproduction selon la revendication 6,
caractérisé en ce que
on monte en aval de la tête de lecture (1) deux démodulateurs synchrones (6, 7) en parallèle, en ce que le signal de sortie de l'asservissement de foyer (8) est amené directement, par l'intermédiaire d'un filtre passe-bas (10), à l'entrée de commande de l'un des démodulateurs synchrones (6), et à l'entrée de commande de l'autre démodulateur synchrone par l'intermédiaire d'un déphaseur à 90° (12), et en ce que les sorties des deux démodulateurs synchrones (6, 7) commandent, par l'intermédiaire d'une unité d'exploitation (13), deux composants de réglage disposés de façon décalée à 90° dans la monture du moteur d'entraînement.

8. Appareil de reproduction selon la revendication 7,
caractérisé en ce que
l'un des éléments de réglage se trouve dans un même plan que la tête de lecture (1).
